# EUROPEAN PATENT APPLICATION

(11) **EP 0 545 253 A1**
(43) Date of publication of application: **09.06.1993**
(21) Application number: 92120074.7
(22) Date of filing: 25.11.1992
(51) Int. Cl.: D06F 43/08

(54) **Automatic device for cleaning the distiller in dry-cleaning machines**

(30) Priority: 02.12.1991 IT BO910451
(71) Applicant: FIRBIMATIC S.r.l., I-40010 Sala Bolognese (Bologna) (IT)
(72) Inventor: Bolognesi, Sergio, I-44040 San Nicolo' (Ferrara) (IT); Biagi, Gino, I-40012 Calderara di Reno (Bologna) (IT)
(74) Representative: Modiano, Guido, Dr.-Ing.

(57) **Abstract**

Automatic device (1) for cleaning the distiller (2) in dry-cleaning machines, including means (19,26,28,32,33,34) for guiding and moving, longitudinally to the distiller, at least one transverse spatula (35) which is suitable to skim the bottom of the distiller and to convey the distillation residues toward a front extraction outlet (9) which is closable by a sealing cover (11) and is sealingly connected to a sealed residue elimination hopper (15).

## Description

The present invention relates to an automatic device for cleaning the distiller in dry-cleaning machines.

Distillers are an integral part of dry-cleaning machines and are devices in which the solvent is made to evaporate in order to separate it from foreign substances such as grease, soaps, powders or the like: distillers are constituted by containers which are preferably shaped like a parallelepiped and on whose heated bottom the distillation residues accumulate and assume a more or less pasty consistency according to the individual instances.

Currently, in order to clean the bottom of distillers there is a discharge outlet which is closed by a removable hatch and toward which the accumulated residues are pushed by means of a wide spatula which can be actuated manually by means of a transverse stem.

Such a cleaning system places the user directly in contact with solvent vapors and with other highly harmful substances, and this is now no longer allowed by increasingly restrictive work-safety rules.

The technical aim of the present invention is to provide an automatic device for cleaning the distiller for dry-cleaning machines which allows to remove the residues directly from the bottom of the distiller without causing direct contact between the removed materials and the operator.

Within the scope of this technical aim, an object of the present invention is to achieve the above aim with a structure which is simple, relatively easy to manufacture in practice, safe in use and effective in operation as well as relatively modest in cost.

This aim and this object are achieved by the present automatic device for cleaning the distiller in dry-cleaning machines, characterized in that it comprises means for guiding and moving, longitudinally to the distiller, at least one transverse spatula which is suitable to skim the bottom of the distiller and to convey the distillation residues toward a front extraction outlet which is closable by a sealing cover and which is sealingly connected to a sealed residue elimination hopper.

Further characteristics and advantages of the present invention will become apparent and evident from the following detailed description of a preferred but not exclusive embodiment thereof, illustrated only by way of non-limitative example in the accompanying drawings, wherein:
figure 1 is a schematic perspective view, partially in phantom lines, of a device for cleaning the distiller for dry-cleaning machines according to the invention;
figure 2 is a sectional side view, taken along a median plane, of the device of figure 1;
figure 3 and figure 4 are views of two further variations of the means for skimming the bottom of the distiller.

With particular reference to said figures, the device for cleaning the distiller 2 in dry-cleaning machines according to the invention is generally designated by the reference numeral 1.

The distiller 2 is constituted, in a known manner, by a box-like container which has, at its base, a heater 3 connected to a heat source and has its cover 4 connected in a known manner to a duct 5 for feeding the liquid to be distilled and to a vapor extraction stack 6; at the front, the distiller is provided with an inspection hatch 7 which is closed by a sealing cover 8.

At the base of the front of the distiller there is an extraction outlet 9 for the distillation residues which extends horizontally and transversely to said front and has a lip 10 toward the outside: the outlet 9 can be tightly closed by means of a cover 11 which is associated with the stem of a pneumatic jack 12; said jack 12 is sealingly mounted on the outside of a pre-chamber 13 which is shaped like a parallelepiped and is sealingly fixed by means of screws 14 to the front of the distiller (for large distillers, the jack 12 may be a double one).

At its base, the pre-chamber 13 defines a hopper 15 which is sealingly fixed to the base of the distiller by means of screws whose axes are indicated by 16: longitudinal guides 17 for the cover 11 are mounted at the base of the pre-chamber 13, and the lower discharge duct 18 of the hopper is cutoff by a manually- or pneumatically-actuated gate valve 18a: the dimensions of the pre-chamber 13 and of the hopper 15 can be very different, depending on whether the extracted residues are to be accumulated in the hopper or discharged directly into a container, not shown in the figure, sealingly fixed to the duct 18.

A screw 19 with an advantageously trapezoidal thread is mounted longitudinally to the distiller in a substantially median position; at one end, said screw 19 is rotatably supported by a bushing 20 which is fixed to the inside of the front panel of the distiller, whereas at the other end the screw is supported, by means of a bearing 21 and of gaskets 22, in a box 23 which is fixed to the outside of the rear panel of the distiller by means of screws whose axes are indicated by 24; a support 25 for an assembly constituted by a motor 26 and a reduction unit 27 is fixed to the box 23 by means of screws 24.

A ballscrew 28, preferably made of bronze, is mounted on the screw 19 and is constituted by two half-parts which can be mutually associated by means of bolts whose axis is indicated by 29; two powerful springs 30, 31 are mounted at the two ends of the screw 19 and have related terminal washers for return at the stroke limits; upon rotation of the motor in one direction or the other, the ballscrew 28 moves in the direction of the arrow A or in the opposite direction.

A small transverse frame 32 is fixed to the ballscrew 28 and has, at its two sides, respective sliders 33 which are guided in rails 34 having a substantially U-shaped cross-section and are fixed along the inner faces of the lateral walls of the distiller.

Two transverse spatulas 35 are fixed below the frame 32, extend along the entire length of the distiller and are installed by providing the presence of means which allow the spatulas to skim the bottom of the distiller when the frame is actuated in the direction of the arrow A and to be free when the frame is actuated in the opposite (return) direction.

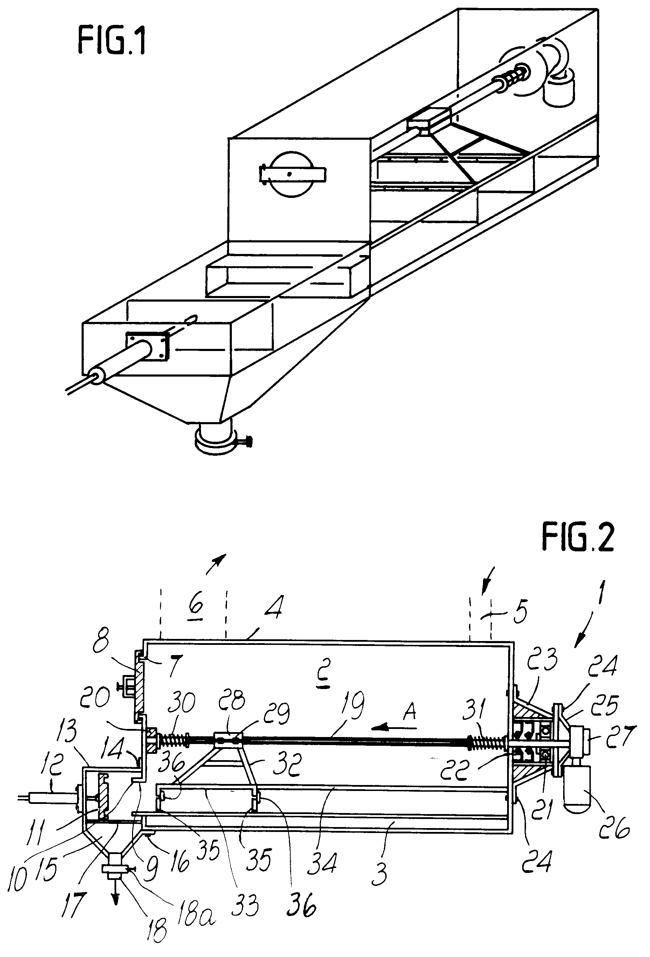

In order to obtain this, the spatulas can be simply hinged (figure 2) about axes which are transverse to the base of the frame and have stroke limiters 36 which stop their oscillation during the advancement stroke but allow their upward motion during the return stroke.

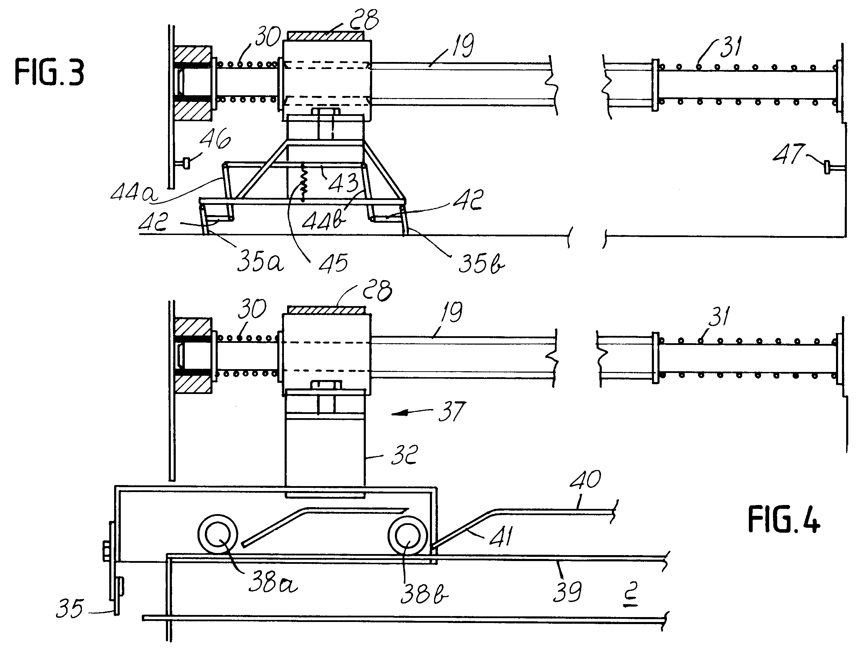

In another envisaged version (figure 3), two spatulas 35a, 35b are hinged below the frame 32; said spatulas have, at the rear and at right angles, respective arms 42 which are mutually connected by an articulated parallelogram which is constituted by a member 43 and by two parallel arms 44a, 44b which are pivoted to the frame 32 in an intermediate position: a traction spring 45 is mounted between the frame and the member; two bumpers 46 and 47 are fixed to the front and rear panels of the distiller, and the top of the arm 44a or the top of the arm 44b rest against said bumpers in order to reverse the orientation of the spatulas (which are arranged vertically during the advancement stroke and are folded upward during the return stroke).

Advantageously, the advancement stroke of the frame is stopped when the front spatula has completely skimmed the bottom of the distiller.

In another envisaged version (figure 4), the frame 32 is associated with the ballscrew 28 by virtue of means 37 which allow its upward movement and has, at its sides, pairs of free wheels 38a, 38b which are suitable to roll, during the advancement stroke, on two lower guides 39 which are fixed to the sides of the distiller and, during the return stroke, on two upper guides 40 (during the advancement stroke, the free wheels remain comprised between 39 and 40): at the front, the guides 40 have ramps 41 which are inclined downward and are flexible to allow the forward transit of the wheels 38a.

The operation of the device according to the invention is intuitive: when the distiller is to be cleaned, the jack 12 is actuated so as to open the outlet 9: then the motor 26 is actuated and the spatulas skim the bottom of the distiller (arrow A), conveying the distillation residues toward 15; once the bottom of the distiller has been skimmed, the motion of the motor 26 is reversed and the rear spatula returns to its initial configuration, adjacent to the rear panel of the distiller; according to the requirements, multiple skimming passes may be performed.

All these passes for cleaning the bottom are performed without the direct physical presence of the operator, i.e. without the possibility of any noxious fumes being inhaled.

It has thus been observed that the invention achieves the intended aim and object.

The invention thus conceived is susceptible to numerous modifications and variations, all of which are within the scope of the inventive concept.

All the details may furthermore be replaced with other technically equivalent elements.

In practice, the materials employed, as well as the shapes and dimensions, may be any according to the requirements without thereby abandoning the protective scope of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Automatic device (1) for cleaning the distiller (2) in dry-cleaning machines, characterized in that it comprises means for guiding and moving, longitudinally to the distiller, at least one transverse spatula (35) which is suitable to skim the bottom of the distiller and to convey the distillation residues toward a front extraction outlet (9) which is closable by a sealing cover (11) and is sealingly connected to a sealed residue elimination hopper (15).

2. Device according to claim 1, characterized in that said guiding means are constituted by lateral rails (34) for lateral sliders (33) of a spatula supporting frame (32) and in that said movement means are constituted by a longitudinal screw (19) which is rotatably mounted and actuated in opposite directions by a related motorization unit (26) in said distiller, a ballscrew (28) being mounted on said screw and being fixed to the spatula supporting frame.

3. Device according to claim 1, characterized in that said spatula is associated with the frame by virtue of means (36;37-41;43) which are suitable to allow the lifting of the lower edge of the spatula from the bottom of the distiller during the return stroke.

4. Device according to claim 1, characterized in that said sealing cover (11) of the extraction outlet is actuated by a jack (12).
